# EUROPÄISCHE PATENTSCHRIFT

(11) **EP 0 490 983 B1**
(45) Veröffentlichungstag und Bekanntmachung des Hinweises auf die Patenterteilung: **28.12.1994**
(21) Anmeldenummer: 90914152.5
(22) Anmeldetag: 01.09.1990
(51) Int. Cl.: H04N 7/00

(54) **Verfahren, Coder und Decoder zur Übertragung und zum kompatiblen Empfang von standardisierten Fernsehsignalen**
Method, coder and decoder for the transmission and compatible reception of standardized television signals
Méthode, codeur et décodeur pour la transmission et réception compatible de signaux de télévision standardisés

(30) Priorität: 08.09.1989 DE 3929967
(43) Veröffentlichungstag der Anmeldung: 24.06.1992
(73) Patentinhaber: Deutsche Thomson-Brandt GmbH, 78010 Villingen-Schwenningen (DE)
(72) Erfinder: KEESEN, Heinz-Werner, D-3000 Hannover (DE)
(74) Vertreter: Einsel, Robert, Dipl.-Ing.
(86) Internationale Anmeldenummer: EP9001468
(87) Internationale Veröffentlichungsnummer: WO9103906

(56) Entgegenhaltungen:
- DE-C- 3 414 452
- DE-C- 3 840 054
- Funkschau 18/1989, Seiten 54-58, "Die neuen Wege des alten PAL"
- IEEE 1989 INTERNATIONAL CONFERENCE ON CONSUMER ELECTRONICS; Digest of Technical Papers, ICCE; Rosemont, 6-9 June 1989, IEEE, Y. Araki et al.: "Wide aspect screen NTSC compatible EDTV", pages 8-9
- IEEE GLOBAL TELECOMMUNICATIONS CONFERENCE & EXIBITION, Hollywood, 28 November - 1 December 1988, vol. 2, IEEE, K.-H. Tzou et al.: "Compatible HDTV coding for broadband ISDN", pages 24.1.1 - 24.1.7.

## Beschreibung

Die Erfindung betrifft ein Verfahren, einen Coder und einen Decoder zur Übertragung und zum kompatiblen Empfang von standardisierten Fernsehsignalen.

Für die Einführung eines 16:9-Breitbildformates in bestehende Fernsehstandards (z.B. PAL, SECAM, NTSC) mit dem Format 4:3 wird das sogenannte 'letter box'-Verfahren diskutiert ("Verbesserungsmöglichkeiten und Entwicklungstendenzen bei PAL", G. Holoch, Vortrag FKTG 17.01.89 in Berlin und "Künftige Fernsehsysteme", F. Müller-Römer, Fernseh- und Kinotechnik, 43.Jahrgang, Nr. 6/1989 und "Die neuen Wege des alten PAL", Dr. A. Ziemer, E. Matzel, Funkschau Nr.18/1989). Bei diesem Verfahren wird in kompatibler Weise auf dem 4:3-Empfänger die gesamte Bildinformation der 16:9-Aufnahme dargestellt mit nicht durch sichtbaren Bildinhalt gefüllten Streifen am oberen und unteren Bildrand.
Dies geschieht dadurch, daß im Studio aus einem 16:9-Bild mit z.B. 625 Zeilen von den 575 aktiven Zeilen im Vollbild jede vierte Zeile herausgenommen wird und bestimmte Zeilen als Zusatzinformation in den dadurch über und unter dem aktiven Bild verbleibenden Streifen übertragen werden. Das aktive Bild im 4:3-Empfänger umfaßt dann 431 Zeilen und die Randstreifen jeweils 72 Zeilen. Diese Art der Darstellung von z.B. Spielfilmen mit 16:9-Format im 4:3-Empfänger ist auch bisher üblich gewesen und erfordert vom Betrachter keine Umgewöhnung.
Weil das Verhältnis der beiden Bildformate dem Verhältnis von der ursprünglichen zur verringerten Zeilenzahl entspricht, wird die Geometrieverzerrung durch die Herausnahme der Zeilen wieder ausgeglichen.
Der 16:9-Empfänger wertet nun die Information aus den beiden Randstreifen aus, um die auf 431 reduzierte Zahl der aktiven Zeilen wieder auf 575 zu erhöhen und damit ein formatfüllendes 16:9-Bild zu erzeugen.

Wenn aus den 575 aktiven Zeilen im Vollbild jede vierte herausgenommen wird, entstehen im 4:3-Empfänger aber Signalsprünge, die besonders an diagonalen oder bewegten Strukturen im Bildinhalt sichtbar werden. Um Signalsprünge zu vermeiden, können die Zeilen im Sender auch vertikal interpoliert werden. Dies führt aber normalerweise dazu, daß die vertikale Auflösung im 4:3-Empfänger reduziert wird.
Damit der Bildinhalt der Zeilen in den Randstreifen beim 4:3-Empfänger nicht störend in Erscheinung tritt, wird die Amplitude dieses Bildinhaltes im Sender um ca. 13 dB abgesenkt und im 16:9-Empfänger entsprechend angehoben. Dies kann aber zu einem deutlich höheren Rauschen im 16:9-Empfänger und damit zu einer Verschlechterung der Bildqualität gegenüber einem heutigen 4:3-Empfänger führen.

In "Compatible HDTV coding for broadband ISDN", K.H. Tzou et al., IEEE Global Telecommunications Conference & Exhibition, Hollywood, 28.11.88, Band 2, Seiten 24.1.1 - 24.1.7, ist ein Verfahren zur digitalen Codierung und Übertragung von EQTV-Signalen in ISDN-Netzen beschrieben, bei dem mit Hilfe einer zweidimensionalen DCT aus einem HDTV-Bild das EQTV-Bild mit verminderter Auflösung extrahiert, digital codiert und datenreduziert übertragen wird. In einem Zusatzkanal werden Zusatzinformationen übertragen, mit deren Hilfe in einem hochauflösenden ISDN-Empfänger das HDTV-Bild wieder rekonstruiert werden kann. Dabei werden über das 4:3-Format hinausgehende Bildteile eines 16:9-Formats ebenfalls im Zusatzkanal übertragen.
Ein 4:3-EQTV-Empfänger gibt dabei nur einen Teil des 16:9-Bildinhalts wieder.

Der Erfindung liegt die Aufgabe zugrunde, ein kompatibles Übertragungssystem für ein 16:9-Fernsehsignal unter Verwendung eines Standard-Fernsehkanals anzugeben, welches bei 4:3-Standard-Fernsehempfängern Bilder im Letterbox-Format und bei verbesserten 16:9-Fernsehempfängern Bilder im 16:9-Format liefert, insbesondere mit einer dem Originalsignal entsprechenden Vertikalauflösung und mit niedrigem Rauschpegel.

Diese Aufgabe wird durch die im Anspruch 1 angegebenen Merkmale gelöst. Vorteilhafte Weiterbildungen der Erfindung sind in den Unteransprüchen angegeben.

Zunächst wird auf der Senderseite das Fernsehsignal mit den 575 aktiven Zeilen des 16:9-Bildes digitalisiert und im Vollbild in vertikaler Richtung speziell gefiltert. Dies kann z.B. durch eine DCT-Transformation (DCT: discrete cosine transform) mit der Länge acht geschehen.

Von den jeweils acht erzeugten Koeffizienten werden jeweils der erste bis fünfte und der achte zusammengefaßt. Diese sechs Koeffizienten werden mit Länge sechs invers DCT-transformiert, D/A-gewandelt und an die entsprechende Stelle im komprimierten 16:9-Bild eingesetzt. Dadurch hat der 4:3-Empfänger praktisch die volle vertikale Auflösung. Der sechste und siebte Koeffizient werden ebenfalls D/A-gewandelt und in den Streifen ober- und unterhalb des komprimierten 16:9-Bildes übertragen.

Ein 4:3-Empfänger wertet die Koeffizienten in den beiden Streifen nicht aus, sondern stellt das Fernsehsignal wie im oben beschriebenen 'letter box'-Verfahren dar. Weil eine DCT-Transformation die Eigenschaft hat, die Signalenergie in den Koeffizienten niedriger Ordnung zu konzentrieren, haben der sechste und siebte Koeffizient im allgemeinen nur eine kleine Amplitude. Dadurch wird in einem 4:3-Standardempfänger von vorneherein die Sichtbarkeit von störendem Bildinhalt in den Streifen reduziert. Es genügt, keine oder nur eine geringe Absenkung dieser Signalanteile vorzunehmen. Vorteilhaft tritt dadurch im 16:9-Empfänger praktisch keine Rauscherhöhung ein.

Statt einer linearen Absenkung können die Amplituden der Koeffizienten in den Streifen mit einer nichtlinearen Funktion abgesenkt und im 16:9-Empfänger entsprechend invers angehoben werden, um ihre Sichtbarkeit im 4:3-Empfänger noch weiter zu reduzieren. Durch die Nichtlinearität der Absenkung und Anhebung (größere Amplituden werden stärker abgesenkt als kleinere) ist eine Rauscherhöhung im 16:9-Empfänger noch geringer als bei einer linearen Absenkung und Anhebung.

Ein verbesserter Empfänger mit einem Bildformat von 16:9 enthält einen Decoder, der die Zusatzinformation aus den beiden Randstreifen auswertet und ein formatfüllendes 16:9-Bild liefert. Dazu wird das empfangene Fernsehsignal digitalisiert, vertikal im Vollbild DCT-transformiert mit Länge sechs, der jeweils sechste Koeffizient auf die achte Stelle verschoben, der jeweils zugehörige sechste und siebte Koeffizient aus den Randstreifen an die sechste und siebte Stelle eingesetzt, die so wiedergewonnenen ursprünglichen acht DCT-Koeffizienten invers DCT-transformiert und an die entsprechende Stelle wie im ursprünglichen Signal eingesetzt. Nach anschließender D/A-Wandlung steht das 16:9-Bild mit voller vertikaler Auflösung und nur unwesentlich erhöhtem Rauschen zur Verfügung.

Im folgenden wird ein Ausführungsbeispiel der Erfindung anhand der Zeichnungen erläutert.

Diese zeigen in
- Fig. 1: Ein Bild im Format 16:9
- Fig. 2: Das Bild aus Fig. 1 mit vertikal komprimiertem aktiven Teil und Zusatzinformation in den beiden Randteilen (bekannt)
- Fig. 3: Darstellung des aktiven Teils des Bildes aus Fig. 2 im 4:3-Empfänger (bekannt)
- Fig. 4: Blockschaltbild eines 16:9-Coders
- Fig. 5: Blockschaltbild eines 16:9-Decoders
- Fig. 6: Ein sich in horizontaler Richtung vor einem hellen Hintergrund bewegendes dunkles Bildteil
- Fig. 7: Mittlere Energieverteilung in den Koeffizienten einer DCT mit Länge acht
- Fig. 8: Eine Koeffizienten-Energieverteilung im komprimierten Bildsignal bei dynamischem Bildinhalt

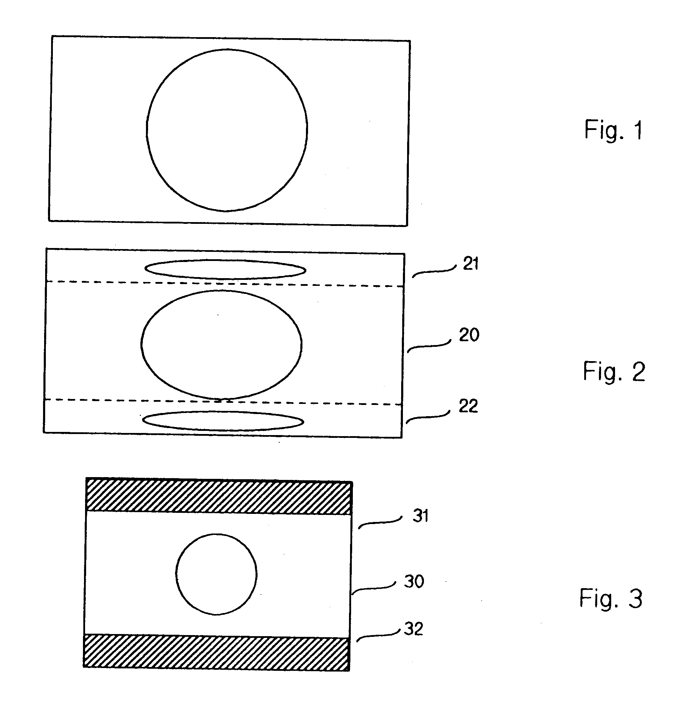

Fig. 1 zeigt ein Fernsehbild im Bildformat 16:9, wie es in einem 16:9-Studio erzeugt wird, mit einem Kreis.

Fig. 2 zeigt, wie das Fernsehbild aus Fig. 1 in einem bekannten 16:9-Coder im Bereich 20 vertikal komprimiert wird. Aus den 575 aktiven Zeilen in Fig. 1 werden durch vertikale Kompression um den Faktor 4/3 431 Zeilen als aktiver Bildteil 20 für einen 4:3-Empfänger erzeugt. Diese Kompression geschieht durch Entfernen jeder vierten Zeile aus dem Bild aus Fig. 1 oder durch eine vertikale Interpolation. Durch die Kompression hat sich die Geometrie des Kreises geändert. Die aus dem Bildteil 20 entfernten Zeilen bzw. zur Decodierung im 16:9-Empfänger benötigten Zeilen werden in den beiden Randstreifen 21 und 22 als Zusatzsignal übertragen.

In Fig. 3 ist dargestellt, daß ein 4:3-Empfänger den aktiven Teil 20 des Bildes aus Fig. 2 im Bereich 30 wiedergibt. Durch die horizontale Kompression des 16:9-Formats in das 4:3-Format um den Faktor 4/3 ist die ursprüngliche Geometrie des Kreises aus Fig. 1 wiederhergestellt. Ein Betrachter hat den vollen Bildinhalt aus Fig. 1 zur Verfügung, allerdings mit reduzierter vertikaler Auflösung und mit schwarzen Streifen 31 und 32 am oberen und unteren Bildrand. Damit das in den Streifen enthaltene Zusatzsignal nicht störend sichtbar wird, muß es in seiner Amplitude im 16:9-Coder entsprechend abgesenkt werden und sich im Ultraschwarzbereich (zwischen Synchron- und Schwarzpegel) befinden.

Eine starke Absenkung des Zusatzsignals führt aber durch das überlagerte Kanalrauschen zu einem verschlechterten Signal-Rausch-Abstand im 16:9-Empfänger. Dieses Zusatzrauschen ist im Bildsignal im Ortsbereich enthalten.

In einem 16:9-Empfänger wird das Zusatzsignal in den Randstreifen 31 und 32 entsprechend verstärkt und zusammen mit dem aktiven Bildteil 30 in Verbindung mit der horizontalen 16:9-Expansion zu einem Bild wie in Fig. 1 geformt.

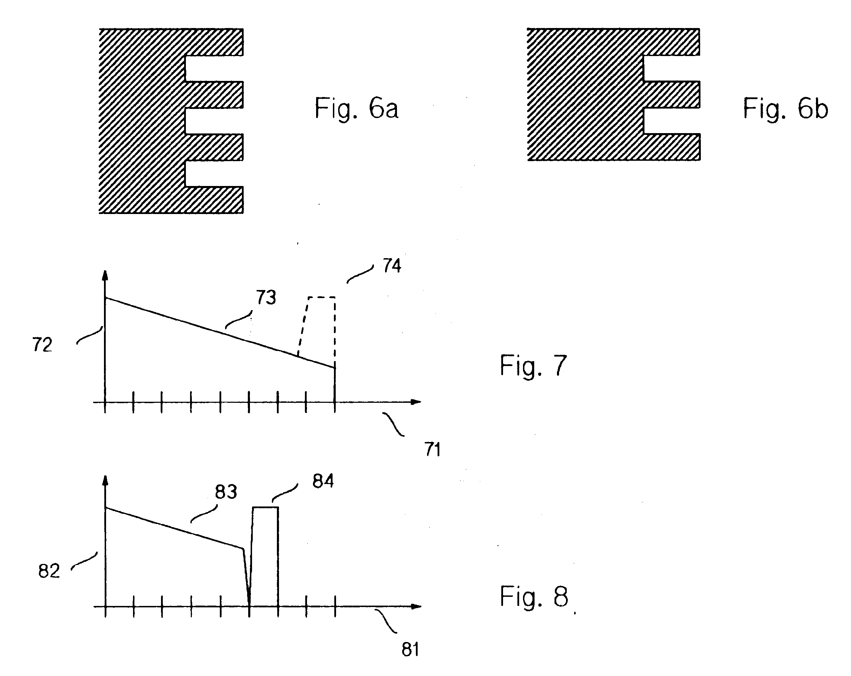

Fig. 6 zeigt einen dunklen Bildteil, der sich in horizontaler Richtung vor einem hellen Hintergrund bewegt. Weil beim Zwischenzeilenverfahren die Halbbilder unterschiedliche Bewegungsphasen darstellen, haben entsprechende Kanten eine Kammstruktur. Wenn nun z.B. in einer solchen Kammstruktur jede vierte Zeile herausgenommen wird, entstehen deutlich sichtbare Störmuster in einem 4:3-Empfänger. Um dies zu vermeiden kann mit vertikalen Interpolationsfiltern eine 'saubere' Darstellung im 4:3-Empfänger erreicht werden. Allerdings werden dadurch höhere vertikale Spektralanteile abgeschnitten, die bei der Decodierung im 16:9-Empfänger fehlen und zu einer reduzierten vertikalen Auflösung führen.

Aus der Kammstruktur kann man ersehen, daß für eine gute Bildqualität in vertikaler Richtung die höchsten möglichen Frequenzen sowohl im 16:9-Empfänger (Fig. 6a) als auch im komprimierten Signal (Fig. 6b) für den 4:3-Empfänger übertragen werden müssen.

Mit einer geeigneten vertikalen Transformation, z.B. mit einer DCT, kann diese Bedingung erfüllt werden.

In Fig. 7 ist der Betrag 72 eines mittleren Energieinhaltes 73 von vertikalen Transformationskoeffizienten in Abhängigkeit von der Frequenz 71 dargestellt. Im Fall einer Kammstruktur wie in Fig. 6a haben die höchsten Spektralanteile 74 einen deutlich erhöhten Betrag, weil das Basismuster des achten Koeffizienten ebenfalls eine solche Struktur hat.

Bei einer DCT der Länge acht wird der Spektralanteil 74 durch den achten Koeffizienten dargestellt. Durch eine Komprimierung um den Faktor 4/3 wird aus dem Wert acht der Wert sechs. Wenn man von den acht DCT-Koeffizienten den sechsten und siebten entfernt und den achten an die Stelle des sechsten setzt, wird bei inverser Transformation eine Kammstruktur wie in Fig. 6b erzeugt. Aus einer DCT der Länge acht wird eine DCT der Länge sechs.

In Fig. 8 ist das entsprechende Spektrum einer solchen DCT der Länge sechs dargestellt. Der jeweils sechste und siebte Koeffizient wird als Zusatzsignal in den Streifen 21 und 22 übertragen. Vorteilhaft werden ihre Beträge nichtlinear komprimiert und im 16:9-Empfänger entsprechend invers expandiert, um einen besseren Signal-Rausch-Abstand zu erreichen.

Der 4:3-Empfänger wertet diese Zusatzsignale nicht aus. Weil im statistischem Mittel die Beträge der DCT-Koeffizienten höherer Ordnung deutlich kleiner sind als die niedrigerer Ordnung, wie auch in Fig. 7 dargestellt, ist eine Absenkung ihrer Pegel zur Vermeidung der Sichtbarkeit im 4:3-Empfänger nicht oder nur in geringem Maße notwendig.

Vorteilhaft stellen die Koeffizienten in den Randstreifen nicht Bildsignale im Ortsbereich dar wie bei dem bekannten Verfahren, sondern Spektralwerte höherer Frequenzen, die für einen Betrachter wie ein hochfrequentes Rauschen aussehen. Ein solches Rauschen stört naturgemäß einen Betrachter weniger als ein verzerrt dargestellter zusätzlicher Bildinhalt.

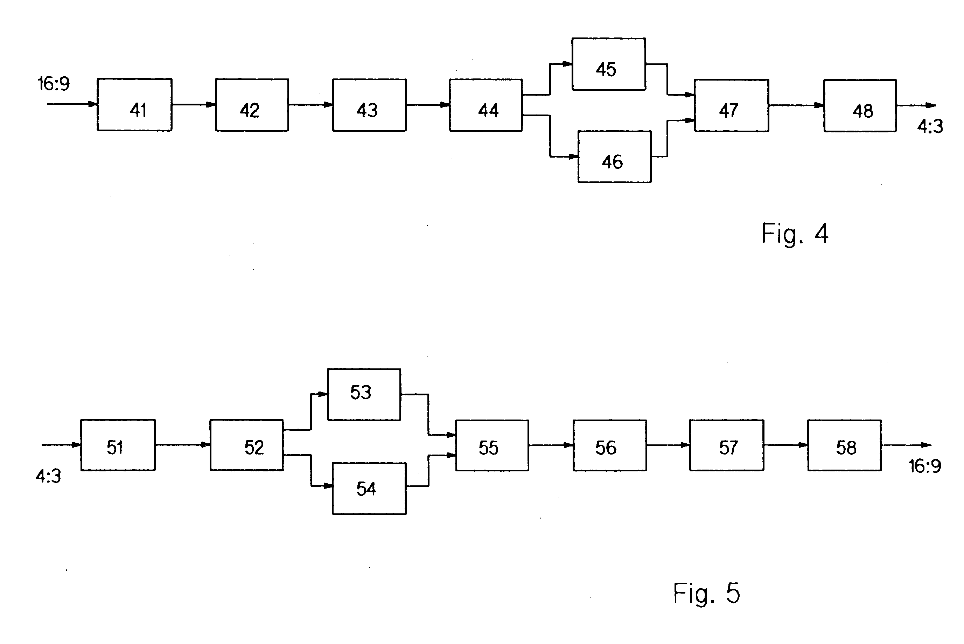

Fig. 4 zeigt das Blockdiagramm eines 16:9-Coders. Die z.B. von einer Kamera kommenden Fernsehsignale im 16:9-Format werden A/D-gewandelt 41 und in einen Speicher 42 eingeschrieben. Aus dem Speicher 42 werden fortlaufend die Abtastwerte von jeweils acht vertikal übereinanderliegenden Bildpunkten ausgelesen und in Schaltung 43 DCT-transformiert. Der sechste und siebte DCT-Koeffizient werden jeweils in Schaltung 44 aussortiert und in Schaltung 46 nichtlinear komprimiert. Dies kann z.B. nach der Funktion y=x^{1/3} geschehen, wobei x das Eingangssignal und y das Ausgangssignal darstellt. Der erste bis fünfte und achte DCT-Koeffizient werden jeweils in Schaltung 44 zusammengefaßt und in Schaltung 45 invers mit Länge sechs DCT-transfromiert. Die Ausgangssignale der Schaltung 45 und 46 werden in den Speicher 47 eingelesen und über den D/A-Wandler 48 als analoges, kompatibles Fernsehsignal im 4:3-Format ausgegeben.

Fig. 5 zeigt das Blockdiagramm eines entsprechenden 16:9-Decoders im 16:9-Empfänger. Die Signale im 4:3-Format werden zunächst in der Schaltung 51 A/D-gewandelt und in den Speicher 52 eingeschrieben. Von dort werden die Abtastwerte von jeweils sechs übereinanderliegenden Bildpunkten ausgelesen und in Schaltung 53 DCT-transformiert mit Länge sechs. Die jeweils zugehörigen sechsten und siebten Koeffizienten werden von Speicher 52 in die Schaltung 54 geleitet und invers zur Funktion der Schaltung 46, also mit y=x³, nichtlinear expandiert. In Schaltung 55 wird der sechste der DCT-transformierten Koeffizienten an die Stelle des ursprünglich achten versetzt und der sechste und siebte Koeffizient aus Schaltung 54 an die sechste und siebte Stelle. Die so wiedergewonnenen ursprünglichen acht DCT-Koeffizienten werden in Schaltung 56 invers DCT-transformiert und in den Speicher 57 eingeschrieben. Von dort werden sie über den D/A-Wandler 58 als analoges Fernsehsignal im Format 16:9 ausgegeben.

Für Fernsehsysteme mit anderen Zeilenzahlen ändern sich die Zahlen entsprechend. Für ein Fernsehsystem mit 525 Zeilen bzw. 481 aktiven Zeilen können z.B. die Randstreifen 21 und 22 jeweils 60 Zeilen enthalten und der Bereich 20 361 Zeilen.

Dieses verbesserte 'letter box'-Verfahren hat folgende Vorteile:
- Die Bildqualität des kompatiblen 4:3-Fernsehsignals ist besser. Es treten keine durch geänderte Abtastung bedingten Sprünge und Bewegungsphasenvertauschungen auf.
- Die vertikale Auflösung des kompatiblen Empfängers, insbesondere die statische, bleibt erhalten.
- Das Bild des 16:9-Empfängers ist weniger anfällig für im Übertragungskanal hinzugefügtes Rauschen, weil das Rauschen im wesentlichen nur auf Spektralwerte höherer Ordnung einwirkt.
- Weil alle DCT-Koeffizienten praktisch unverändert übertragen werden, hat der 16:9-Empfänger die volle vertikale Auflösung.

Statt der Kombination DCT mit Länge acht/inverse DCT mit Länge sechs bzw. umgekehrt kann z.B. auch eine Kombination DCT mit Länge vier/inverse DCT mit Länge drei und umgekehrt angewendet werden. Es müssen dann nach jeweils drei Bildpunkten in vertikaler Richtung die Vorzeichen der Koeffizienten invertiert werden.

Statt einer DCT können auch andere steilflankige Filter verwendet werden. Spektralwerte, die z.B. über 5/8 der maximalen Frequenz (fₘₐₓ) hinausgehen, werden durch ein Tiefpaßfilter abgeschnitten. Spektralwerte im Bereich 6/8 bis 7/8 fₘₐₓ werden durch einen Bandpaß abgetrennt und als Zusatzsignal übertragen. Spektralwerte im Bereich fₘₐₓ werden durch eine geeignete Modulation in den Bereich 6/8 fₘₐₓ versetzt. Im 16:9-Decoder findet dieser Vorgang dann in umgekehrter Reihenfolge statt.

Das Verfahren mit der Verschiebung von DCT-Koeffizienten kann auch benutzt werden, um bei anderen Bildformat-Änderungen DCT-Koeffizienten zur Auflösungserhöhung bereitzustellen. Z.B. kann bei einer Verdoppelung der Zeilenzahl der höchste Koeffizient aus dem Bild mit der kleineren Zeilenzahl den höchsten Koeffizient für die inverse DCT doppelter Länge zur Erzeugung des Hochzeilen-Signals bilden und damit eine Erhöhung der vertikalen Auflösung im Hochzeilen-Signal zu bewirken.

Das Verfahren kann auch zum Deinterlacing (Umwandlung eines Halbbild-Fernsehsignals in ein Vollbild-Fernsehsignal) verwendet werden. Wenn nämlich aus je zwei Halbbildern mit dynamischem Bildinhalt ein Vollbild gebildet wird, können die in Fig. 6 beschriebenen Kammstrukturen störend hervortreten. Um das zu vermeiden, reicht es aus, diesen störenden Inhalt des Gesamtbildes, der im wesentlichen nur durch den höchsten vertikalen DCT-Koeffizienten repräsentiert wird, zu berechnen, zu invertieren und zum vorhandenen gesamten Bildinhalt zu addieren. Vorteilhaft wird dadurch die störende Kammstruktur aufgehoben.

## Patentansprüche

1. Verfahren zur Übertragung und zum kompatiblen Empfang von standardisierten Fernsehsignalen mit einem ersten Bildfprmat, insbesondere von 4:3, in dem der wesentliche Bildinhalt in einem zweiten Bildformat mit einem größeren Bild-Seitenverhältnis, insbesondere von 16:9, innerhalb des ersten angeordnet ist und mit Zusatzinformationen (31, 32), die im Bereich des ersten Bildformats außerhalb des wesentlichen Bildinhalts (30) angeordnet sind und die von einem Empfänger für das zweite Bildformat decodierbar sind, um zusammen mit der Information aus dem wesentlichen Bildinhalt ein formatfüllendes Bild im zweiten Bildformat auf diesem Empfänger darzustellen, wobei die übertragenen Fernsehsignale von einem Standard-Empfänger für das erste Bildformat ohne Auswertung der Zusatzinformationen decodierbar sind, **dadurch gekennzeichnet**, daß coderseitig:
- das Fernsehsignal im ersten Bildformat erzeugt wird aus einem Quellsignal im zweiten Bildformat, indem vertikale Signalabschnitte von übereinanderliegenden Bildpunkten gebildet und die Werte dieser Bildpunkte jeweils mittels einer ersten eindimensionalen Transformationsart in Spektralanteile transformiert werden;
- innerhalb dieser Signalabschnitte hochfrequente Spektralanteile (74) an die Stelle (84) weniger hochfrequenter Spektralanteile verschoben und andere, weniger hochfrequente Spektralanteile aus dem Gesamtspektrum des jeweiligen Signalabschnitts entfernt werden;
- aus diesen weniger hochfrequenten Spektralanteilen die Zusatzinformationen gebildet werden;
- aus den nicht verschobenen Spektralanteilen (83) zusammen mit den hochfrequenten Spektralanteilen mittels einer inversen, zweiten eindimensionalen Transformationsart wieder entsprechende Bildpunkt-Werte für den wesentlichen Bildinhalt gebildet werden,
und daß bei der Decodierung für das zweite Bildformat:
- diese Bildpunkt-Werte mittels der zweiten Transformationsart in Spektralanteile transformiert werden;
- diese Spektralanteile zusammen mit den jeweils zugehörigen hochfrequenten Spektralanteilen aus den Zusatzinformationen wieder in die ursprüngliche coderseitige Anordnung in den Signalabschnitten verschoben werden;
- diese Gesamt-Spektralanteile jeweils mittels der inversen ersten Transformationsart in Bildunkt-Werte transformiert werden,
und daß bei der Decodierung für das erste Bildformat:
- nur die übertragenen Bildpunkt-Werte aus dem wesentlichen Bildinhalt verwendet werden.

2. Verfahren nach Anspruch 1, **dadurch gekennzeichnet**, daß die erste Transformationsart eine DCT mit einer ersten Länge und die zweite Transformationsart eine DCT mit einer zweiten, kleineren Länge ist, wobei insbesondere das Verhältnis der beiden DCT-Längen dem Verhältnis der beiden Bildformate entspricht.

3. Verfahren nach Anspruch 2, **dadurch gekennzeichnet**, daß statt einer DCT Filter (Tiefpaß-, Hochpaß-, Bandpaß-Filter) mit den jeweiligen Spektralbereichen entsprechenden Grenzfrequenzen verwendet werden.

4. Verfahren nach einem oder mehreren der Ansprüche 1 bis 3, **dadurch gekennzeichnet**, daß die Signalabschnitte bei der ersten Transformation und bei der inversen ersten Transformation jeweils vier oder acht Bildpunkt-Werte bzw. Transformations-Koeffizienten enthalten.

5. Verfahren nach Anspruch 4, **dadurch gekennzeichnet**, daß jeweils in den Signalabschnitten entweder die hochfrequenten Spektralanteile (74) aus dem achten und die weniger hohen Spektralanteile aus dem sechsten und siebten Transformations-Koeffizienten oder die hochfrequenten Spektralanteile aus dem vierten und die weniger hohen Spektralanteile aus dem dritten Transformations-Koeffizienten bestehen.

6. Verfahren nach einem oder mehreren der Ansprüche 1 bis 5, **dadurch gekennzeichnet**, daß die Zusatzinformationen (31, 32) vor der Übertragung in ihrer Amplitude, insbesondere nach einer nichtlinearen Funktion, abgesenkt und bei der Decodierung für das zweite Bildformat wieder entsprechend invers angehoben werden.

7. Coder für ein Verfahren nach einem oder mehreren der Ansprüche 1 bis 6, dem am Eingang eines A/D-Wandlers (41) ein Quellsignal im zweiten Bildformat zugeführt wird und der versehen ist mit einem nachgeschalteten ersten Speicher (42), mit einem nachgeschalteten eindimensionalen DCT-Transformierer für die erste Transformationsart (43), mit einem nachgeschalteten Sortierer (44), der weniger-hochfrequente Koeffizienten zu einer Wichtungsschaltung (46) mit nichtlinearer Funktion und die übrigen Koeffizienten zusammengefaßt zu einem inversen eindimensionalen DCT-Transformierer für die zweite Transformationsart (45) weiterleitet, mit einem zweiten Speicher (47), in den die Ausgangssignale des inversen DCT-Transformierers und der Wichtungsschaltung entsprechend eingeschrieben werden und dem ein D/A-Wandler (48) nachgeschaltet ist, der als Ausgangssignal Bilder im ersten Bildformat liefert.

8. Decoder für ein Verfahren nach einem oder mehreren der Ansprüche 1 bis 6, dem am Eingang eines A/D-Wandlers (51) ein Quellsignal im ersten Bildformat zugeführt wird und der versehen ist mit einem nachgeschalteten ersten Speicher (52) mit einem nachgeschalteten eindimensionalen DCT-Transformierer für die zweite Transformationsart (53) und mit einer nachgeschalteten Wichtungsschaltung (54) mit zur coderseitigen Wichtungsschaltung (46) inverser nichtlinearer Funktion, mit einem nachgeschalteten Sortierer (55), der weniger-hochfrequente Koeffizienten aus der Wichtungsschaltung und die übrigen Koeffizienten aus dem DCT-Transformierer entsprechend der ursprünglichen coderseitigen Anordnung zusammenfaßt und zu einem inversen eindimensionalen DCT-Transformierer für die erste Transformationsart (56) weiterleitet, mit einem nachgeschalteten zweiten Speicher (57), dem ein D/A-Wandler (58) folgt, der als Ausgangssignal Bilder im zweiten Bildformat liefert.

9. Verfahren zur Umwandlung von standardisierten Fernsehsignalen mit Halbbildern in Fernsehsignale mit Vollbildern durch Zusammenfassung jeweils zweier zusammengehörender Halbbilder zu einem Vollbild, **dadurch gekennzeichnet**, daß in den sich daraus ergebenden Vollbildern innerhalb von vertikalen, dynamischen Bildinhalt repräsentierenden Signalabschnitten einer festgelegten Länge, insbesondere von acht Bildpunkt-Werten, jeweils der höchstfrequente Koeffizient (74) einer eindimensionalen DCT dieser Länge berechnet wird, dieser Koeffizient invers mit dieser Länge DCT-transformiert wird, und der sich so ergebende Inhalt der Signalabschnitte invertiert zu den Vollbildern addiert wird.

## Claims

1. A method for the transmission and for the compatible reception of standardised television signals with a first picture format, especially of 4:3, in which the essential picture content is arranged in a second picture format with a larger picture-edge ratio, especially of 16:9, within the first and with additional items of information (31,32), which are arranged in the region of the first picture format outside the essential picture content (30) and which can be decoded by a receiver for the second picture format, in order to present together with the information from the essential picture content a full format picture in the second picture format on this receiver, in which the transmitted television pictures can be decoded by a standard receiver for the first picture format without evaluation of the additional items of information,
characterised in that at the coder end:
- the television signal in the first picture format is generated from a source signal in the second picture format, in that vertical signal portions are formed from overlying picture points and the values of these picture points are each transformed into spectral components by means of a first one-dimensional type of transformation;
- within these signal portions high frequency spectral components (74) are shifted to the position (84) of less high frequency spectral components and other, less high frequency components are removed from the overall spectrum of the respective signal portion;
- from the spectral components (83) which are not shifted together with the high frequency spectral components there are re-formed corresponding picture points for the essential picture content by means of an inverse one-dimensional type of transformation,
and in that when decoding for the second picture format:
- these picture point values are transformed by means of the second type of transformation into spectral components;
- these spectral components together with the respective associated high frequency spectral components from the additional items of information are shifted back to the original coder end arrangement in the signal portions;
- these overall spectral components are transformed into picture point values in each case by means of the inverse of the first type of transformation,
and in that when decoding for the first picture format
- only the transmitted picture point values from the essential picture content are used.

2. A method according to claim 1, characterised in that the first type of transformation is a DCT with a first length and the second type of transformation is a DCT with a second, smaller length, in particular the ratio of the two DCT-lengths corresponding to the ratio of the two picture formats.

3. A method according to claim 2, characterised in that instead of a DCT there are employed filters (low-pass, high-pass, band-pass filters) with limit frequencies corresponding to the respective spectral ranges.

4. A method according to one or more of claims 1 to 3, characterised in that the signal portions in the first transformation and in the inverse first transformation in each case contain four or eight picture point values or transformation coefficients.

5. A method according to claim 4, characterised in that in each case in the signal portions either the high frequency spectral components consist of the eighth and the less high spectral components from the sixth and seventh transformation coefficients or the high frequency spectral components consist of the fourth and the less high spectral components from the third transformation coefficients.

6. A method according to one or more of claims 1 to 5, characterised in that the additional items of information (31,32) are reduced before the transmission in their amplitude, especially according to a nonlinear function and during the decoding for the second picture format are increased in correspondingly inverse way.

7. A coder for a method according to one or more of claims 1 to 6 to which is supplied at the input of an analog-to-digital converter (41) a source signal in the second picture format and which is provided with a downstream first memory (42), with a downstream one-dimensional DCT transformer for the first type of transformation (43), with a downstream sorter (44), which feeds the less high frequency coefficients to a weighting circuit (46) with a non-linear function and the combined remaining coefficients to an inverse one-dimensional DCT transformer for the second type of transformation (45), with a second memory (47) into which the output signals of the inverse DCT transformer and the weighting circuit are written accordingly and which is followed by a digital-to-analog converter (48), which supplies pictures in the first picture format as the output signal.

8. A decoder circuit for a method according to one or more of claims 1 to 6 to which is supplied at the input of an analog-to-digital converter (51) a source signal in the first picture format and which is provided with a downstream first memory (52) with a downstream one-dimensional DCT transformer (53) and with a downstream weighting circuit (54) with a non-linear function that is inverse with respect to the coder end weighting circuit (46), with a downstream sorter (55) which combines the less high frequency components from the weighting circuit and the remaining coefficients from the DCT transformer corresponding to the original coder end arrangement and feeds them to an inverse one-dimensional DCT transformer for the first type of transformation (56) , with a downstream second memory (57) which is followed by a digital-to-analog converter (58) which supplies pictures in the second picture format as the output signal.

9. A method for the conversion of standardised television signals with fields into television signals with frames by the combination in each case of two mutually associated fields into a frame, characterised in that in the frames thereby resulting within vertical signal portions representing dynamic picture content and of a determined length, especially of eight picture point values, in each case there is calculated the highest frequency coefficient (74) of a one-dimensional DCT of this length, this coefficient is subjected to an inverse DCT transformation of this length, and the thereby resulting content of the signal portions is added inverted to the frames.

## Revendications

1. Procédé pour la transmission et la réception compatible de signaux télévisuels standardisés, comprenant un premier format d'image, notamment de 4:3, et dans lequel le contenu d'image essentiel dans un second format d'image avec un rapport largeur/hauteur plus élevé, notamment de 16/9^{e}, est placé à l'intérieur du premier, et comprenant des informations complémentaires (31, 32), qui se trouvent dans le domaine du premier format et en dehors du contenu d'image essentiel (30), et qui sont décodables par un récepteur pour le second format , afin de représenter sur ce récepteur, dans le second format et en commun avec l'information du contenu d'image essentiel, une image remplissant le format, les signaux télévisuels transmis étant décodables par un récepteur standard pour le premier format, sans exploitation des informations complémentaires, **caractérisé en ce que** du côté du codeur:
- on produit le signal télévisuel de premier format à partir d'un signal source de second format, en formant des portions verticales de signal à partir d'eléments d'image superposés et en transformant les échantillons de ces élements d'image en portions spectrales, à chaque fois au moyen d'une première méthode de transformation à une dimension;
- on décale, à l'intérieur de ces portions de signal, des portions spectrales RF (74) pour les mettre à la place (84) de portions spectrales moins radioélectriques et on enlève du spectre global de la portion de signal, d'autres portions spectrales moins radioélectriques;
- on forme les informations complémentaires à partir de ces portions spectrales moins radioélectriques;
- on reconstitue des échantillons équivalents d'éléments d'image à partir des portions spectrales non décalées (83) et des portions spectrales radioélectriques, au moyen d'une seconde méthode de transformation, inverse et à une dimension,
et **en ce que** lors du décodage pour le second format:
- on transforme ces échantillons d'éléments d'image en portions spectrales au moyen de la seconde méthode de transformation;
- on décale ces portions spectrales avec les portions spectrales radioélectriques équivalentes des informations complémentaires pour les ramener à leur position d'origine du côté du codeur dans les portions de signal;
- on transforme ces portions du spectre global en échantillons d'éléments d'image au moyen de l'inverse de la première méthode de transformation, et **en ce que**, lors du décodage pour le premier format:
- on n'utilise que les échantillons transmis d'éléments d'image du contenu d'image essentiel.

2. Procédé selon la revendication 1, **caractérisé en ce** **que** la première méthode de transformation est une DCT d'une première longueur et que la seconde méthode de transformation est une DCT avec une seconde longueur, inférieure à la première, le rapport des deux longueurs DCT correspondant notamment au rapport des deux formats d'image.

3. Procédé selon la revendication 2, **caractérisé en ce qu'**on peut utiliser des filtres (filtre passe-bas, filtre passe-haut, filtre passe-bande) avec des fréquences d'arrêt correspondant aux domaines spectraux respectifs, en lieu et place d'une DCT.

4. Procédé selon l'une ou plusieurs des revendications 1 à 3 **caractérisé en ce que,** lors de la première transformation et de la première transformation inverse, les portions de signal contiennent quatre ou huit échantillons d'éléments d'image ou coefficients de transformation.

5. Procédé selon la revendication 4, **caractérisé en ce** **que,** dans les portions de signal, soit, les portions spectrales radioélectriques (74) se composent du huitième et les portions spectrales moins radioélectriques du sixième et du septième coefficients de transformation, soit, les portions spectrales radioélectriques se composent du quatrième et les portions spectrales moins radioélectriques du troisième coefficients de transformation.

6. Procédé selon l'une ou plusieurs des revendications 1 à 5, **caractérisé en ce qu'**on désaccentue les informations complémentaires (31, 32) dans leur amplitude avant la transmission, notamment selon une fonction non linéaire et qu'on les réaccentue, proportionellement et de manière inverse, lors du décodage pour le second format.

7. Codeur pour un procédé selon une ou plusieurs des revendications 1 à 6 recevant, à l'entrée d'un convertisseur analogique/numérique (41), un signal source dans le second format et pourvu d'une première mémoire (42) placée en aval, d'un transformateur DCT à une dimension pour la première méthode de transformation (43), placé en aval, d'un coordonnateur (44) placé en aval, amenant les coefficients moins radioélectriques à un circuit de pondération (46) avec une fonction non linéaire et les autres coeffficients, condensés, à un transformateur DCT inverse à une dimension pour la seconde méthode de transformation (45), d'une seconde mémoire (47), dans laquelle les signaux de sortie du transformateur DCT inverse et du circuit de pondération sont stockés de manière adéquate et à l'aval de laquelle on a placé un convertisseur numérique/analogique (48), qui fournit comme signal de sortie, des images dans le premier format.

8. Décodeur pour un procédé selon une ou plusieurs des revendications 1 à 6 recevant, à l'entrée d'un convertisseur analogique/numérique (51), un signal source dans le premier format et pourvu d'une première mémoire (52) placée en aval, d'un transformateur DCT à une dimension pour la seconde méthode de transformation (53), placé en aval, et d'un circuit de pondération (54) placé en aval, avec une fonction non linéaire inverse au circuit de pondération placé du côté du codeur (46), d'un coordonnateur (55) placé en aval, condensant, de manière équivalente au positionnement original du côté du codeur,et amenant à un transformateur DCT inverse et à une dimension pour la première méthode de transformation (56), les coefficients moins radioélectriques provenant du circuit de pondération et les coefficients venant du transformateur DCT, d'une seconde mémoire (57) placée en aval et suivie d'un convertisseur numérique/analogique (58), qui fournit comme signal de sortie, des images dans le second format.

9. Procédé de conversion de signaux télévisuels standardisés contenant des trames, en signaux télévisuels contenant des images pleines, au moyen de la réunion en une image pleine de deux trames équivalentes, **caractérisé en ce que**, dans les images pleines ainsi constituées, à l'intérieur de portions de signal verticales, représentant un contenu d'image dynamique et d'une longueur déterminée, notamment de huit échantillons d'éléments d'image, on calcule le coefficient le plus radioélectrique (74) d'une DCT à une dimension et de cette longueur et **qu'**on ajoute, de manière inverse, le contenu ainsi obtenu des portions de signal aux images pleines.
